# EUROPÄISCHE PATENTANMELDUNG

(11) **EP 4 366 039 A1**
(43) Veröffentlichungstag der Anmeldung: **08.05.2024**
(21) Anmeldenummer: 23020470.3
(22) Anmeldetag: 12.10.2023
(51) Int. Cl.: H01M 10/6567, H01M 50/209, H01M 50/242, H01M 50/293

(54) **KOMPRESSIONSPAD MIT EINER SELEKTIV- ODER SEMIPERMEABLEN TRENNSCHICHT SOWIE HERSTELLUNGSVERFAHREN FÜR EINEN BATTERIEZELLSTAPEL MIT EBENDIESEN KOMPRESSIONSPADS**

(30) Priorität: 02.11.2022 DE 102022128907
(71) Anmelder: Dr. Ing. h.c. F. Porsche Aktiengesellschaft, 70435 Stuttgart (DE)
(72) Erfinder: Grass, Dominik, 74321 Bietigheim-Bissingen (DE)

(57) **Zusammenfassung**

In verschiedenen Ausführungsformen wird ein Kompressionspad (3) für einen Batteriezellstapel (4) bereitgestellt, aufweisend: einen Innenraum, in welchem ein Füllmaterial vorliegt; eine den Innenraum umgebende Oberfläche, wobei zumindest ein Teil der Oberfläche des Kompressionspads (3) eine selektiv- oder semipermeable Trennschicht aufweist. Ferner wird ein Verfahren zum Herstellen eines Batteriezellmoduls bereitgestellt, welches die erfindungsgemäßen Kompressionspads (3) aufweist.

## Beschreibung

Die vorliegende Erfindung betrifft ein Kompressionspad für ein Batteriezellstapel (Batteriezellpaket). Ferner betrifft die Erfindung ein Herstellungsverfahren für ein Batteriezellstapel, welcher Kompressionspads mit einer selektiv- oder semipermeablen Trennschicht aufweist.

Die Reichweite von Elektrofahrzeugen wird maßgeblich durch die darin verbaute Traktionsbatterie bestimmt. Zum Antrieb moderner Elektrofahrzeuge werden heutzutage geeignet dimensionierte Hochvoltbatterien verwendet, die aus Batteriezellmodulen (auch als Batteriemodule bezeichnet) aufgebaut sind, wovon jedes wiederum eine Anzahl von Batteriezellen beinhaltet, wovon jede die kleinste für sich abgeschlossene Energiespeicherzelle darstellt. So umfasst beispielsweise die zweilagige Performance-Batterie Plus, welche in einigen Porsche Taycan Modellen eingesetzt wird, 33 Zellmodule, die je aus zwölf einzelnen Batteriezellen bestehen. Damit weist die Traktionsbatterie insgesamt 396 Batteriezellen aufweist, wobei als Batteriezellen Lithium-Ionen-Akkumulatoren zum Einsatz kommen. Die Traktionsbatterie weist eine Systemspannung von 800 Volt und eine Gesamtkapazität von 93,4 kWh auf.

Zum Aufbau der Batterien werden grundsätzlich Batteriemodule verwendet, in denen eine Anzahl von mehreren Zellen parallel angeordnet ist, wobei zwischen je zwei Zellen ein Kompressionspad (auch als Kompressionseinlage bezeichnet) angeordnet ist. Die zwischen den Batteriezellen angeordneten Kompressionspads erfüllen eine weitere wichtige Aufgabe, nämlich die Bereitstellung eines Ausgleichs für die anwachsenden Zelldicken (Swelling). Beim Swelling handelt es sich um eine Volumenänderung einer Batteriezelle, insbesondere einer Lithium-Ionen-Zelle, welche einerseits beim Laden und Entladen beobachtet werden kann und andererseits auf einer langsameren Zeitskala durch Alterung der Batteriezelle bedingt ist. Swelling wird durch eine Strukturänderung der Aktivschichten innerhalb der Batteriezelle bewirkt, die durch die darin stattfindende Umlagerung von Lithium-Ionen bedingt ist. Besonders ausgeprägt ist Swelling bei Pouch-Zellen, einer weit verbreiteten Bauform von Batteriezellen. Durch das soeben erwähnte Anordnen von Kompressionspads zwischen die Batteriezellen in deren Stapelrichtung, können diese durch Kompression die Volumenänderung der Batteriezellen innerhalb eines Batteriemoduls ausgleichen.

Zusätzlich können mittels der komprimierbaren Pads Kräfte im Batteriezellpaket aufgebaut werden, wodurch dieses im Gehäuse (Batterie- oder Modulgehäuse) verspannt werden kann. Um eine gute Vorspannung zu erreichen unterscheidet sich das Außenmaß des Batteriezellpakets üblicherweise nur unwesentlich von dem Innenmaß des Gehäuses. Als Kompressionspads werden aktuell reine Schaum-Pads verwendet, welche sich stark komprimieren lassen. Daher wird das Batteriezellpaket beim Einbau überdrückt, um seine Dimension temporär zu verkleinern, und in diesem überdrückten Zustand in das Gehäuse eingeschoben, was den Vorgang des Einschiebens des Batteriezellstapels verkompliziert und dadurch prozessseitig relativ aufwendig macht. Der Einschiebevorgang findet dann unter bestimmten Einschubkräften Statt, da sich das Batteriezellpaket beim Einschieben von Innen an die Innenseiten des Gehäuses presst und es somit zu Reibkräften kommt, durch welche entweder die Batteriezellen oder die Kompressionspads unter Umständen beschädigt werden können.

Druckschrift US 2014/141307 A1 beschriebt so ein typisches Fertigungsverfahren Batterie mit einem Batteriegehäuse und mehreren, darin nebeneinander angeordneten Batteriezellen, wobei zwischen jeweils zwei benachbarten Batteriezellen ein Schaum-Kompressionspad angeordnet ist, welches beim Montagevorgang komprimiert ist und nach der Montage expandiert.

Druckschrift GB 1197468 A offenbart, im Kontext einer Batterie, die Verwendung von Separatoren zur Trennung von Elektroden, welche sich bei einer Befeuchtung ausdehnen.

Druckschrift WO 2021/233778 A1 offenbart eine Batterie mit mehreren, nebeneinander angeordneten Batteriezellen, wobei zwischen zwei zueinander benachbarten Batteriezellen jeweils ein Kühlkörper angeordnet ist, welcher aufgrund einer elastischen Außenhaut auch als Kompressionspad dient.

Ausgehend von den aus dem Stand der Technik bekannten Kompressionspads kann die Aufgabe der vorliegenden Erfindung darin gesehen werden, Kompressionspads sowie ein entsprechendes Herstellungsverfahren bereitzustellen, welche den Einschiebevorgang des Batteriezellpakets ins Gehäuse erleichtern.

Diese Aufgabe wird mittels der Gegenstände der unabhängigen Patentansprüche gelöst. Weitere bevorzugte Ausführungsformen finden sich in den abhängigen Patentansprüchen.

Erfindungsgemäß wird in verschiedenen Ausführungsformen ein Kompressionspad für einen Batteriezellstapel bereitgestellt, welches einen Innenraum, in welchem ein Füllmaterial vorliegt, und eine den Innenraum umgebende Oberfläche aufweist, wobei zumindest ein Teil der Oberfläche des Kompressionspads eine selektiv permeable oder semipermeable Trennschicht aufweist, welche beispielsweise eine selektiv- oder semipermeable Membran aufweisen kann. Nachfolgend wird verkürzend nur von einer semipermeablen Trennschicht gesprochen, welche jedoch stets auch eine selektiv permeable Trennschicht aufweisen kann.

Die vorliegende Erfindung löst die ihr zugrunde liegende Aufgabe durch einen speziellen Aufbau der Kompressionspads. Im Montagezustand weisen die Kompressionspads ein geringeres Volumen auf als im später erfolgenden Betriebszustand, ohne dass dabei aktiv Druck auf sie ausgeübt werden muss. Anders ausgedrückt kann man den Montagezustand als den nicht aktivierten Zustand der Kompressionspads auffassen, während die erfindungsgemäßen Kompressionspads im Betriebszustand in einem aktivierten Zustand vorliegen. Mit den Kompressionspads im Montagezustand kann ein Zellstapel aufgebaut werden, der Untermaß hat im Hinblick auf seinen Einbauraum im Gehäuse und somit einfach in ein Batteriemodul oder Batteriegehäuse eingeschoben werden kann.

Für die Überführung der erfindungsgemäßen Kompressionspads vom Montagezustand in den Betriebszustand wird erfindungsgemäß Osmose verwendet. Dazu weist das erfindungsgemäße Kompressionspad eine Oberfläche auf, welche zumindest in einem Teilbereich eine semipermeable Trennschicht, etwa eine entsprechende Membran aufweist. Dabei kann das erfindungsgemäße Kompressionspad auch vollständig mit der semipermeablen Trennschicht überzogen sein. Das erfindungsgemäße Kompressionspad kann auch im Hinblick auf seine Funktionsweise als osmotisches Kompressionspad bezeichnet werden.

Das erfindungsgemäße Kompressionspad kann im Zellstapel verbaut werden, welcher in ein geeignetes Gehäuse eingebaut wird. Im Gehäuse erfolgt die Aktivierung bzw. Überführung der erfindungsgemäßen Kompressionspads in den Betriebszustand durch Kontakt der semipermeablen Trennschicht mit einem Lösungsmittel. Die semipermeable Trennschicht kann für dieses permeabel sein, so dass das Lösungsmittel durch diese in den Innenraum der erfindungsgemäßen Kompressionspads hineinströmen kann, um den Konzentrationsunterschied bzw. den Unterschied zwischen den chemischen Potentialen eines oder mehrerer Stoffe in den durch die Membran getrennten Phasen und deren unterschiedlichen Konzentrationen innerhalb und außerhalb der semipermeablen Trennschicht auszugleichen. Das erfindungsgemäße Kompressionspad nimmt dadurch an Volumen zu und baut dadurch den erforderlichen Druck auf die Batteriezellen auf, um sie innerhalb des Gehäuses zu verspannen.

Der Innenraum des erfindungsgemäßen Kompressionspads kann das einströmende Fluidvolumen aufnehmen, wozu es beispielsweise verteilte Hohlräume aufweisen kann. Das initiale Hineinströmen des Lösungsmittels in den Innenraum des Kompressionspads kann durch Kapillarkräfte zusätzlich zu den chemischen Potentialen bzw. den Konzentrationsunterschieden der getrennten Phasen angetrieben werden bei Befeuchtung der Membran mit dem Lösungsmittel. Sobald das Lösungsmittel in den Innenraum hineingeströmt ist, baut sich ein osmotischer Druck auf, welcher weiteres Lösungsmittel von der Außenseite durch die semipermeable Trennschicht hindurch in den Innenraum des Komprerssionspads nachströmen lässt. Zusätzlich kann im Innenraum der erfindungsgemäßen Kompressionspads ein Stoff vorliegen, welcher beim anfänglich einströmenden Lösungsmittel gelöst wird und einen Konzentrationsgradienten erzeugt, welcher das Einströmen des Lösungsmittels weiter verstärkt. In diesem Fall kann die Membran für diesen Stoff undurchlässig sein. Unter einem Lösungsmittel kann im Rahmen dieser Beschreibung ein Fluid gemeint sein, welches Teil mindestens einer der Phasen ist, welche durch die Membran getrennt sind, und welches zur Verringerung eines Konzentrationsunterschiedes bzw. eines Unterschiedes der chemischen Potentiale zwischen den beiden Phasen durch die Membran hindurchtreten kann.

Bei dem Teil der Oberfläche des Kompressionspads, welches eine semipermeable Trennschicht aufweist, kann es sich insbesondere um Bereiche des Kompressionspads handeln, welche innerhalb des damit aufgebauten Batteriezellstapels nicht an den Batteriezellen anliegen, also etwa bei Betrachtung des Batteriezellstapels in einem seitlichen Querschnitt die Oberseite und Unterseite eines beispielsweise quaderförmigen oder kissenförmigen Kompressionspads.

Des Weiteren kann der Osmoseprozess und somit der Druckaufbau des Kompressionspads auch durch ein Gas aus der bei der Montage befindlichen Umgebung herbeigeführt werden bevor dann in einem späteren Befüllprozess ein Fluid in die Batterie eingebracht wird.

Gemäß weiteren Ausführungsformen des erfindungsgemäßen Kompressionspads kann das Füllmaterial einen nach dem Osmosevorgang elastischen Stoff aufweisen, beispielsweise einen Kunststoff, insbesondere einen porösen Kunststoff, etwa ein geschäumtes Polymer. Alternativ kann das Füllmaterial ein Elastomer aufweisen, welches Perforationen aufweisen kann, in die das Lösungsmittel einströmen kann. Vor dem stattfindenden Osmosevorgang muss das Füllmaterial nicht elastisch sein, sondern kann fest sein, oder es kann elastisch sein, jedoch eine größere Materialhärte aufweise.

Gemäß weiteren Ausführungsformen des erfindungsgemäßen Kompressionspads kann das Füllmaterial einen Unterschied zwischen chemischen Potentialen und einen Konzentrationsunterschied zwischen den durch die selektiv- oder semipermeable Trennschicht getrennten Phasen aufweisen.

Erfindungsgemäß wird ferner ein Verfahren zum Herstellen eines Batteriezellmoduls bereitgestellt, wobei es auch zum Herstellen der der übergeordneten Instanz, nämlich einer Batterie, dienen kann. In einem ersten Schritt weist das Verfahren Bereitstellen eines Batteriezellpakets auf, welches eine Anordnung von Batteriezellen aufweist, wobei zwischen je zwei Batteriezellen ein osmotisches Kompressionspad gemäß einer der vorangehend beschriebenen Ausführungsformen angeordnet ist. Die Batteriezellen können beispielsweise als Pouch-Zellen vorliegen. Als nächsten Schritt weist das Verfahren Einbringen des Batteriezellpakets in ein Gehäuse auf, wobei das Batteriezellpaket hinsichtlich des dafür im Gehäuse vorgesehenen Bauraums ein Untermaß aufweist. Nachfolgend weist das Verfahren Einbringen eines Fluides oder eines Gases in das Gehäuse auf, sodass es in Kontakt mit der semipermeablen Trennschicht der Kompressionspads tritt und durch diese in die Kompressionspads strömt, um den Konzentrationsunterschied auszugleichen. Bei dem Fluid kann es sich um das zuvor erwähnte Lösungsmittel handeln.

Gemäß weiteren Ausführungsformen des erfindungsgemäßen Herstellungsverfahrens kann sich bei dem Fluid um ein Kühlmedium handeln. Dabei kann es sich bei dem Batteriezellmodul oder der entsprechenden Batterie um ein direktgekühltes Batteriezellmodul oder eine direktgekühlte Batterie handeln. Diese zeichnen durch ein Kühlsystem aus, bei dem die Batteriezellen direkt von dem Kühlmedium umströmt werden. Dabei werden auch zugleich die Kompressionspads direkt von dem Kühlmedium umströmt. Bei einer solchen Ausführungsform wird also ein Fluid verwendet, das zugleich auch als Kühlmedium in dem Batteriemodul bzw. der Batterie verwendet wird.

Gemäß weiteren Ausführungsformen in den Kompressionspads und/oder in dem Fluid ein Stoff enthalten sein, dessen Konzentration in den Kompressionspads geringer ist als im Fluid. Hierbei kann die semipermeable Trennschicht für diesen Stoff zugleich undurchlässig sein. Dadurch kann ein Konzentrationsgradient aufgebaut werden, welcher das Einströmen des Fluides n die erfindungsgemäßen Kompressionspads weiter vorantreibt.

Erfindungsgemäß wird hier ferner Verwendung von Osmose vorgestellt, um eine Expansion eines Kompressionspads herbeizuführen, das in einem Batteriezellstapel innerhalb eines Gehäuses angeordnet ist und bzw. während es von einem Fluid oder einem Gas umströmt wird.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und der beiliegenden Zeichnungen.

Figur 1 veranschaulicht den Einbau eines Batteriezellstapels mit erfindungsgemäßen Kompressionspads im Montagezustand in ein Gehäuse.

Figur 2 veranschaulicht ein Gehäuse mit eingebautem Batteriezellstapel mit Kompressionspads im Betriebszustand.

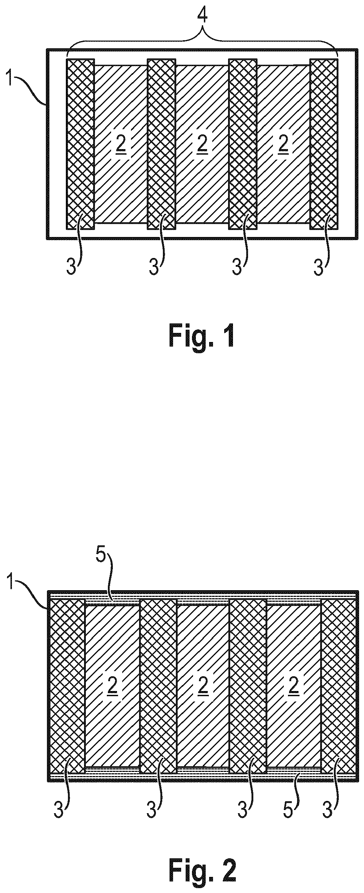

In Figur 1 ist ein Batteriezellstapel 4 skizziert, kurz nachdem er in ein Gehäuse 1 eingebracht worden ist. Der Batteriezellstapel 4 weist im gezeigten Beispiel drei Batteriezellen 2 auf, die jeweils durch ein erfindungsgemäßes Kompressionspad 3 voneinander getrennt sind. Zusätzlich ist an jedem Ende des Zellstapels 4 ein solches Kompressionspad 3 vorgesehen. Da die Kompressionspads 3 im Montagezustand, also im nicht expandierten Zustand vorliegen, weist der Batteriezellstapel 4 ein Untermaß auf und kann ohne besondere Maßnahmen relativ einfach in das Gehäuse 1 eingeschoben werden.

In Figur 2 ist der Batteriezellstapel 4 im Betrieb des dazugehörigen Batteriemoduls bzw. der dazugehörigen Batterie gezeigt. Hier wurde die Kompressionspads 3 aktiviert, indem ein Fluid 5 durch die im Gehäuse 1 vorgesehenen Strömungswege das Flüssigkühlsystems geleitet worden ist. Die Strömungswege können zwischen Innenwänden des Gehäuses 1 und den Oberflächen der Batteriezellen 2 und der Kompressionspads 3 gebildet werden, so dass ein direktgekühltes Batteriezellpaket 4 vorliegt. Beim Durchströmen des Gehäuses 1 kommt das Fluid 5 in Kontakt mit der semipermeablen Trennschicht der Kompressionspads 3 und strömt durch diese, um den Konzentrationsunterschied innerhalb und außerhalb der semipermeablen Trennschicht auszugleichen. Dadurch nimmt das Kompressionspad 3 an Volumen zu und baut dadurch den erforderlichen Druck auf die Batteriezellen 2 auf, sodass diese im Gehäuse 1 verspannt werden. Wie in Figur 2 veranschaulicht, gibt es axial keinen Freiraum mehr zwischen dem Batteriezellstapel 4 mit aktivierten Kompressionspads 3 und der Innenwand des Gehäuses 1.

Wie zuvor erwähnt kann die Aktivierung der Kompressionspads durch gesondertes Durchleiten eines Fluides durch das Kühlsystem der Batterie bzw. des Batteriemoduls. Alternativ kann das flüssige Kühlmedium als Fluid fungieren, so dass kein gesonderter Aktivierungsschritt erforderlich ist. Hierzu kann das Kühlmedium zusätzliche Additive aufweisen, um die Osmose durch die semipermeable Trennschicht zu verstärken.

## Patentansprüche

1. Kompressionspad (3) für einen Batteriezellstapel (4), aufweisend:
einen Innenraum, in welchem ein Füllmaterial vorliegt;
eine den Innenraum umgebende Oberfläche, wobei zumindest ein Teil der Oberfläche des Kompressionspads (3) eine selektiv- oder semipermeable Trennschicht aufweist.

2. Kompressionspad (3) gemäß Anspruch 1,
wobei das Füllmaterial einen nach dem Osmosevorgang elastischen Stoff aufweist.

3. Kompressionspad (3) gemäß Anspruch 1 oder 2,
wobei das Füllmaterial einen Unterschied zwischen chemischen Potentialen und einen Konzentrationsunterschied zwischen den durch die selektiv- oder semipermeable Membran getrennten Phasen aufweist.

4. Verfahren zum Herstellen eines Batteriezellmoduls, aufweisend die Schritte:
Bereitstellen eines Batteriezellpakets (4), welches eine Anordnung von Batteriezellen (2) aufweist, wobei zwischen je zwei Batteriezellen (2) ein Kompressionspad (3) gemäß einem der vorangehenden Ansprüche angeordnet ist;
Einbringen des Batteriezellpakets (4) in ein Gehäuse (1), wobei das Batteriezellpaket (4) hinsichtlich des dafür im Gehäuse (1) vorgesehenen Bauraums ein Untermaß aufweist;
Einbringen eines Fluides oder eines Gases (5) in das Gehäuse (1), sodass es in Kontakt mit der selektiv- oder semipermeablen Trennschicht der Kompressionspads (3) kommt und durch diese hindurch in die Kompressionspads (3) strömt, um den Konzentrationsunterschied auszugleichen.

5. Verfahren gemäß Anspruch 4,
wobei es sich bei dem Fluid (5) um ein Kühlmedium handelt.

6. Verfahren gemäß Anspruch 4 oder 5,
wobei in den Kompressionspads (3) und/oder in dem Fluid (5) ein Stoff enthalten ist, dessen Konzentration in den Kompressionspads (3) geringer ist als im Fluid (5).

7. Verwendung von Osmose, um eine Expansion eines Kompressionspads herbeizuführen, das in einem Batteriezellstapel innerhalb eines Gehäuses angeordnet ist und von einem Fluid oder einem Gas umströmt wird.
